# EUROPEAN PATENT APPLICATION

(11) **EP 2 782 013 A2**
(43) Date of publication of application: **24.09.2014**
(21) Application number: 14156520.0
(22) Date of filing: 25.02.2014
(51) Int. Cl.: G06F 11/07

(54) **Fault-spot locating method, switching apparatus, fault-spot locating apparatus, and information processing apparatus**

(30) Priority: 21.03.2013 JP 2013058988
(71) Applicant: FUJITSU LIMITED, Kawasaki-shi, Kanagawa 211-8588 (JP)
(72) Inventor: Araki, Kazuhiko, Kanagawa, 211-8588 (JP)
(74) Representative: HOFFMANN EITLE

(57) **Abstract**

A fault-spot locating method, comprising at a switching apparatus that includes an interface for connection to a master, which is a controlling object, and a plurality of ports for connection to a slave, which is a controlled object, providing another interface used to output information indicating an operation of the switching apparatus and received data, and causing the switching apparatus to transmit the information via the another interface, using a processor. And causing an apparatus that is capable of obtaining the information transmitted via the another interface to locate a spot where a fault has possibly occurred by using the information to check the received data and the operation of the switching apparatus caused by a command from the master, using the processor.

## Description

### FIELD

The embodiments discussed herein are related to a technology for addressing the occurrence of a fault in a configuration in which a switching apparatus is positioned between a master, i.e., a controlling object, and a slave, i.e., a controlled object.

### BACKGROUND

Typically, an external apparatus (hereinafter "device") to be controlled is connectable to an information processing apparatus (e.g., computer). A device to be controlled is called a "slave", and an object that controls the device is called a "master". The master transmits various commands to the slave on an as-needed basis. Currently, the majority of electronic devices have an information processing apparatus installed thereon and thus correspond to masters.

An address for a communication (hereinafter referred to as a "device address")is assigned to each alone connected to a master. Hence, using a device address, the master may cause a command to be transmitted to a proper slave even when a plurality of slaves are connected.

The range of the values of device addresses, i.e., the number of connectable slaves, is limited by a bit number designated by a specification. Thus, to connect to the master more slaves than the number designated by the bit number, a switching device is used.

The switching device includes an interface for connection to the master and a plurality of ports for connection to slaves. In accordance with an instruction from the master, the switching device selects a port to be used for a communication. Thus, using the switching device allows at most as many slaves as the number specified by the designated bit number to be connected to each port provided at the switching device.

In a system needed to have a high reliability, the consistency of data transmitted and received between a master and a slave needs to be checked. Error detection and error correction may be performed by adding a CRC (Cyclic Redundancy Check) code or the like to transmitted or received data. However, even when both the master and each slave are provided with an error detecting function and an error correcting function, the master does not correctly locate a spot where a fault has occurred. This is because, even assuming that the master, the switching device, and each slave are all being properly operated, data is transmitted and received between the master and the switching device and between the switching device and the slaves.

In a conventional method of correctly locating a spot where a fault has occurred in a system configuration in which a switching device is positioned between a master and each slave, a feedback circuit is provided between the switching device and each slave. In this conventional method, the data transmitted and received between the master and the switching device is compared with the data transmitted and received between the switching device and a slave, using the feedback circuit ,so that a fault spot can be located.

In this conventional method, a feedback circuit is provided between a switching device and each slave so that the switching device can specify a slave that actually performs a communication. Thus, a comparator circuit or the like that compares data is also provided for each feedback circuit. Accordingly, this conventional method requires both an increased number of interconnections and a larger-scale circuit and thus needs a higher cost for fault-spot locating. To reduce the cost for the entirety of the system, it appears to be important to allow a fault spot to be located at a lower cost.

### Prior art documents

### Patent documents

Patent document 1: Japanese Laid-open Patent Publication No. 2007-148592
Patent document 2: Japanese Laid-open Patent Publication No. 2011-244326
Patent document 3: Japanese Laid-open Patent Publication No. 2002-366451

### SUMMARY

In one aspect, an object of the present invention is to provide a technology for correctly locating a fault spot at a low cost in a configuration in which a switching device is provided between a master and each slave.

In one system to which the invention has been applied, a switching apparatus that includes an interface for connection to a master, i.e., a controlling obj ect, and a plurality of ports for connection to a slave, i.e., a controlled object, is provided with another interface used to output information indicating an operation of the switching apparatus and received data; The information is transmitted from the switching apparatus via the other interface to an apparatus that is capable of obtaining information transmitted via the other interface. The apparatus is caused to locate a spot where a fault has possibly occurred by checking received data and an operation of the switching apparatus caused by a command from the master using the obtained information.

### BRIEF DESCRIPTION OF DRAWINGS

FIG. 1A illustrates an exemplary configuration of an information processing apparatus in accordance with the embodiment.
FIG. 1B illustrates an exemplary configuration of an information processing apparatus in accordance with the embodiment.
FIG. 2A illustrates exemplary configurations of a PLD and a switching device.
FIG. 2B illustrates exemplary configurations of a PLD and a switching device.
FIG. 2C illustrates exemplary configurations of a PLD and a switching device.
FIG. 3A illustrates data input to a selector as SEL1 to SEL4.
FIG. 3B illustrates data input to a selector as SEL1' to SEL4'.
FIG. 4A illustrates examples of data transmitted and received between a PLD and a switching device in the designating of a port address for the switching device.
FIG. 4B illustrates examples of data transmitted and received between a PLD and a switching device in the reading of a port address designated for the switching device.
FIG. 4C illustrates examples of data transmitted and received between a PLD and a switching device in the writing of data to a slave.
FIG. 4D illustrates examples of data transmitted and received between a PLD and a switching device in the reading of data from a slave.
FIG. 5A is a flowchart illustrating an operation of a monitored-data changeover unit of a switching device.
FIG. 5B is a flowchart illustrating an operation of a monitored-data changeover unit of a switching device.
FIG. 6A is a flowchart illustrating an operation of a PDL performed in the transmitting of a write command.
FIG. 6B is a flowchart illustrating an operation of a PDL performed in the transmitting of a write command.
FIG. 7A is a flowchart illustrating an operation of a PDL performed in the transmitting of a read command.
FIG. 7B is a flowchart illustrating an operation of a PDL performed in the transmitting of a read command.

### DESCRIPTION OF EMBODIMENTS

The following will describe embodiments of the invention in detail with reference to the drawings.

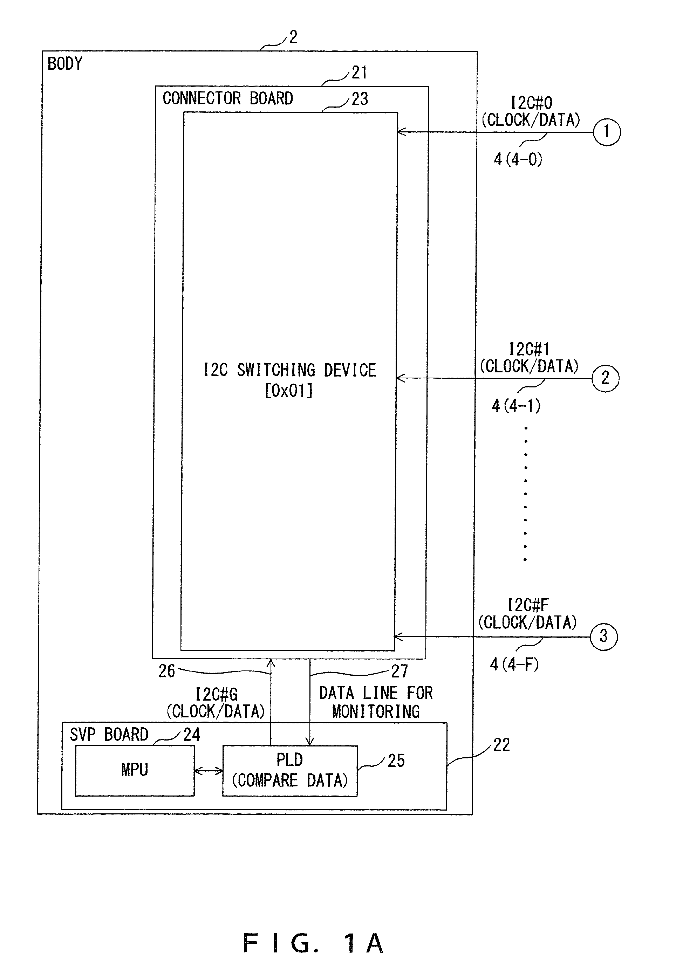

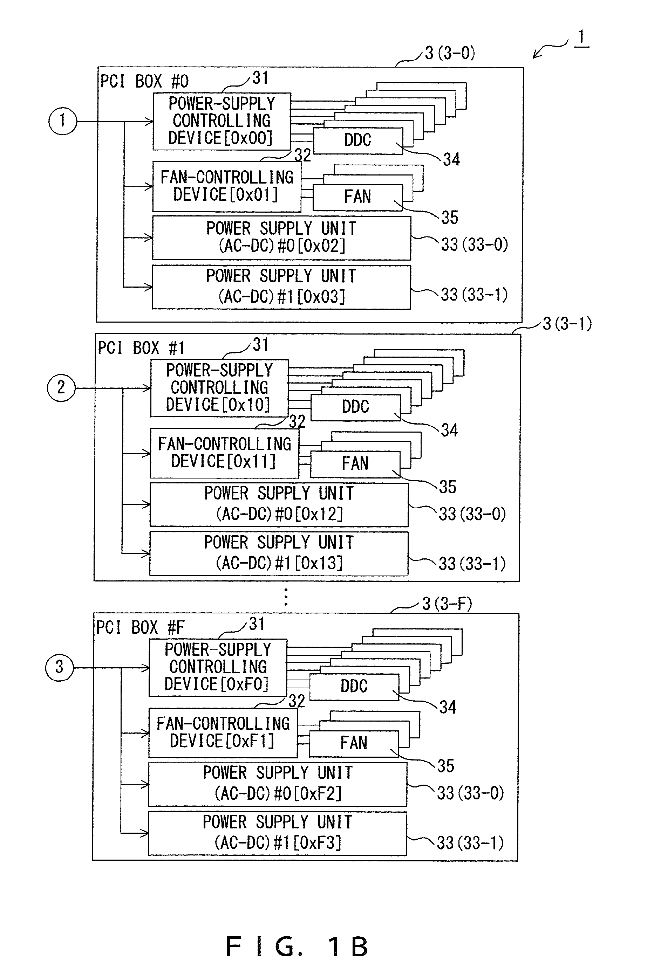

FIG. 1A and FIG. 1B illustrate an exemplary configuration of an information processing apparatus in accordance with the embodiment. As illustrated in FIG. 1A and FIG. 1B, an information processing apparatus 1 in accordance with the embodiment, which is used as, for example, a server, includes a body 2 and a plurality of PCI (Peripheral Components Interconnect bus) boxes 3 (3-0 to 3-F).

The body 2 is a part that serves as a server to perform a process for providing a service. FIG. 1A depicts only a connector board 21 and an SVP (SerVice Processor) board 22 as elements of the body 2. In addition, the body 2 has, for example, one or more system boards and one or more I/O (Input/Output) units mounted therein.

The connector board 21 is used to connect each PCI box 3 to the body 2. The connector board 21 has an I2C (Inter-Integrated Circuit) switching device (hereinafter simply referred to as a "switching device") 23 mounted thereon. Hexadecimal digits in parenthesis of the switching device 23 (=0x01) indicate an example of an assigned device address.

The SVP board 22 is a processing unit to control and monitor the entirety of the information processing apparatus 1. The SVP board 22 has mounted thereon an MPU (Micro-Processing Unit) 24 and a PLD (Programmable Logic Device) 25 used as a data comparing unit.

An I2C bus is a two-wire-system serial interface that includes an SDL (Serial Data Line) through which data is transferred and an SCL (Serial Clock Line) through which clocks are transferred. The PLD 25 is connected to the switching device 23 via an I2C bus 26, and the switching device 23 is connected to the each PCI boxes via I2C buses 4 (4-0 to 4-F). The connection between the PLD 25 and the switching device 23 also relies on a data line for monitoring 27 in addition to the I2C bus 26.

Each PCI box 3 is a device to add a PCI slot to the body 2. Each PCI box 3 has mounted therein a power-supply controlling device 31, a fan controlling device 32, two power supply units 33 (33-0, 33-1), a plurality of DDCs (Direct Current-Direct Current Converters) 34, and a plurality of fans 35. Hexadecimal digits in parenthesis indicated for the power-supply controlling device 31, the fan controlling device 32, and the two power supply units mounted in each PCI box 3 also indicate examples of assigned device addresses.

The two power supply units 33, which serve to supply electric power to a device connected to a PCI slot of the PCI box itself convert, for example, commercial AC (Alternating Current) power into DC power. Each DDC 34 managed by the power-supply controlling device 31 converts DC power supplied from the two power supply units 33 into DC power having a different voltage. The fan controlling device 32 controls the fans 35 managed by this fan controlling device 32 so as to cool the PCI box 3 itself.

The MPU 24 on the SVP board 24 activates the body 2 and each PCI board 3 in accordance with an instruction from outside. Before activating each PCI box 3, the MPU 24 activates a power supply unit 33 to be activated from among the power supply units 33 mounted in each PCI box 3 and causes each power-supply controlling unit 31 to perform control for the DDCs 24. Accordingly, the MPU 24 causes a power supply to each PCI box 3 to be started.

Each PCI box 3 is provided with a plurality of temperature sensors (not illustrated). The MPU 24 monitors a temperature measured by each temperature sensor from the body 2 and controls the fan controlling device 32 mounted in each PCI box 3 so as to maintain the temperature of the inside of each PCI box 3 within a proper range.

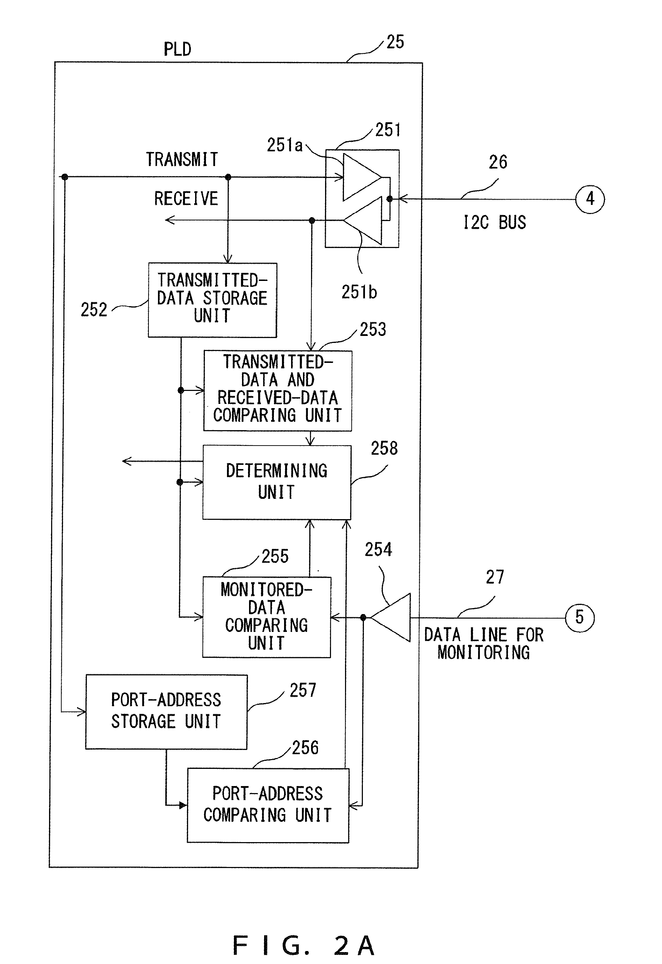

FIG. 2A to FIG. 2C illustrate exemplary configurations of a PLD and a switching device. With reference to FIG. 2A to FIG. 2C, respective configurations and operations of the PLD 25 and the switching device 23 will be described in detail.

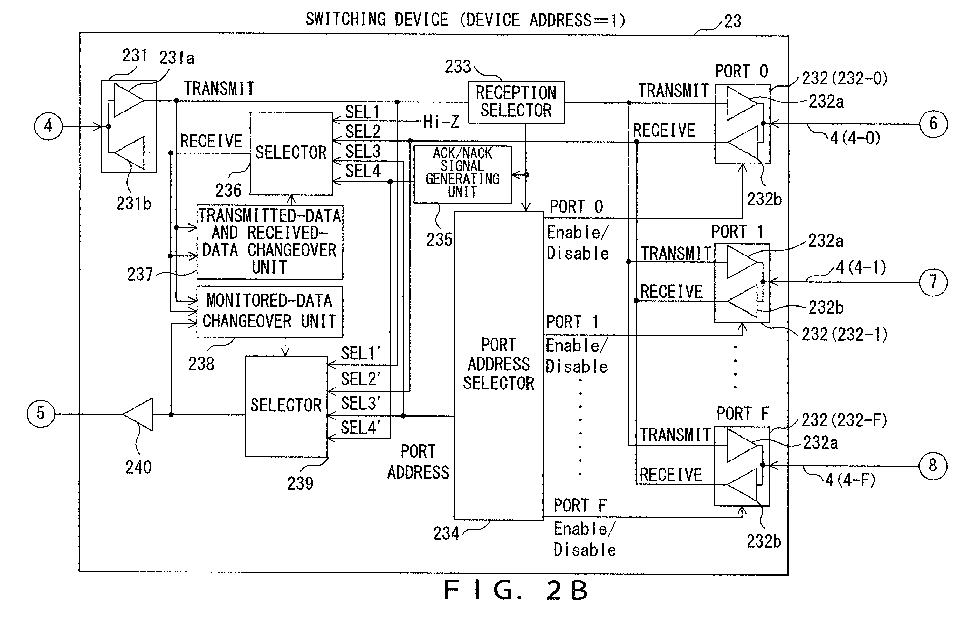

As illustrated in FIG. 2A, the PLD 25 includes a transmitting and receiving unit 251, a transmitted-data storage unit 252, a transmitted-data and received-data comparing unit 253, a receiving buffer 254, a monitored-data comparing unit 255, a port-address comparing unit 256, a port-address comparing unit 257, and a determining unit 258. As illustrated in FIG. 2B, the switching device 23 includes a transmitting and receiving unit 231, a plurality of ports 232 (232-0 to 232-F), a reception selector 233, a port-address selector 234, an ACK (ACKnowledgement)/NACK (Negative ACKnowledgement) signal generating unit 235, a selector 236, a transmitted-data and received-data changeover unit 237, a monitored-data changeover unit 238, a selector 239, and a transmitting buffer 240.

First, the switching device 23 will be described in detail. The switching device 23 corresponds to a switching apparatus in accordance with the embodiment.

The transmitting and receiving unit 231 is an interface for a communication with the PLD 25. The transmitting and receiving unit 231 includes a receiving buffer 231a to receive data from the PLD 25 and a transmitting buffer 231b to transmit data to the PLD 25. The data received by the receiving buffer 231a is output to the reception selector 233, the transmitted-data and received-data changeover unit 237, and the monitored-data changeover unit 238. The data received from the PLD 25 includes various commands, device addresses, and so on.

A master transmits a device address before transmitting a command. The reception selector 233 is a selector that monitors a device address input from the receiving buffer 231a and autonomously selects a destination of the data input subsequent to the device address. When the input device address is a device address assigned to the switching device 23, the reception selector 233 outputs the device address and the data input subsequent to this device address to the port-address selector 234 and the ACK/NACK signal generating unit 235. When the input device address is not a device address assigned to the switching device 23, the reception selector 233 outputs the input device address and the data input subsequent to this device address to each port 232.

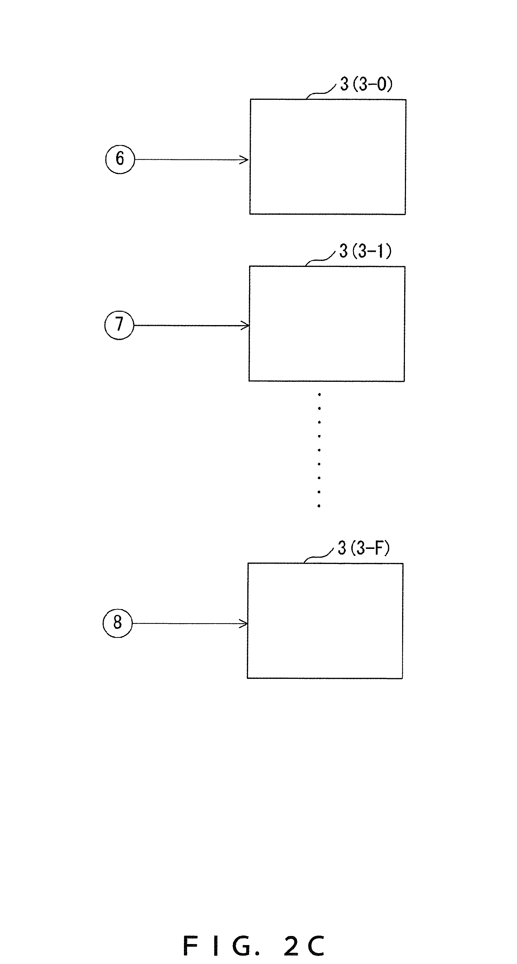

The ports 232 of the switching device 23 each have identification information (hereinafter referred to as a "port address" or "port number") assigned thereto. The switching device 23 enables a communication performed via a port 232 designated using a port address by the master. As long as the master does not designate a new port address, the same port 232 serves to enable a communication. Note that "0" to "F" in FIG. 1(FIG. 1A and FIG. 1B) and FIG. 2(FIG.2A to FIG. 2C)indicate port addresses (port numbers).

Whether to or not to enable a communication is controlled by a signal output by the port-address selector 234 for each port 232 (hereinafter referred to as a "port select signal") . At the port 232 for which a port select signal indicates "enable", a transmitting buffer 232a and a receiving buffer 232b provided at this port 232 are operated to enable a communication. Meanwhile, at the port 232 for which a port select signal indicates "disable", a transmitting buffer 232a and a receiving buffer 232b provided at this port 232 are not operated, thereby disabling a communication.

The ACK/NACK signal generating unit 235 generates ACK or NACK signal in accordance with whether data addressed to the switching device 23 has been properly received. The ACK or NACK signal generated by the ACK/NACK signal generating unit 235 is output to the selector 236.

The selector 236 is connected to , for example a high impedance port(SEL1)(indicated as "Hi-Z" in FIG. 2B; the voltage is at a pulled-up level), each port 232(SEL2), the port-address selector 234(SEL3), and the ACK/NACK generating unit 235 (SEL4). In FIG. 2B, the data input from those elements are indicated as SEL1 to SEL2. The selector 236 outputs one of SEL1 to SEL4 in accordance with an instruction from the transmitted-data and received-data changeover unit 237. The data output by the selector 236 is output to the transmitting buffer 231b of the transmitting and receiving unit 231, the transmitted-data and received-data changeover unit 237, and the monitored-data changeover unit 238.

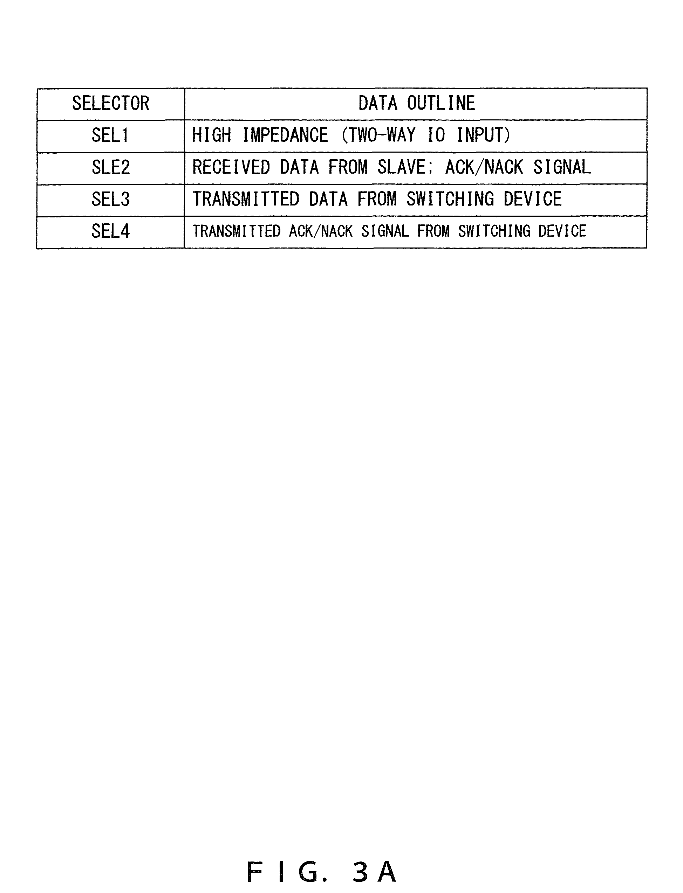

FIG. 3A illustrates data input to a selector 236 as SEL1 to SEL4. As depicted in FIG. 3A, SEL1 is high impedance state. Referring to a port 232 as an example, a high impedance state corresponds to a state wherein a two-way data communication (IO) can be performed.

SEL2 is received data (including ACK or NACK signal) from a slave (any of the PCI boxes 3). SEL3 is transmitted data from the port-address selector 234. In particular, the transmitted data includes, for example, a device address and the port address of a port 232 by which a communication is currently enabled to be performed. SEL4 is the ACK or NACK signal output by the ACK/NACK signal generating unit 235. The ACK or NACK signal is transmitted data (response) from the switching device 23.

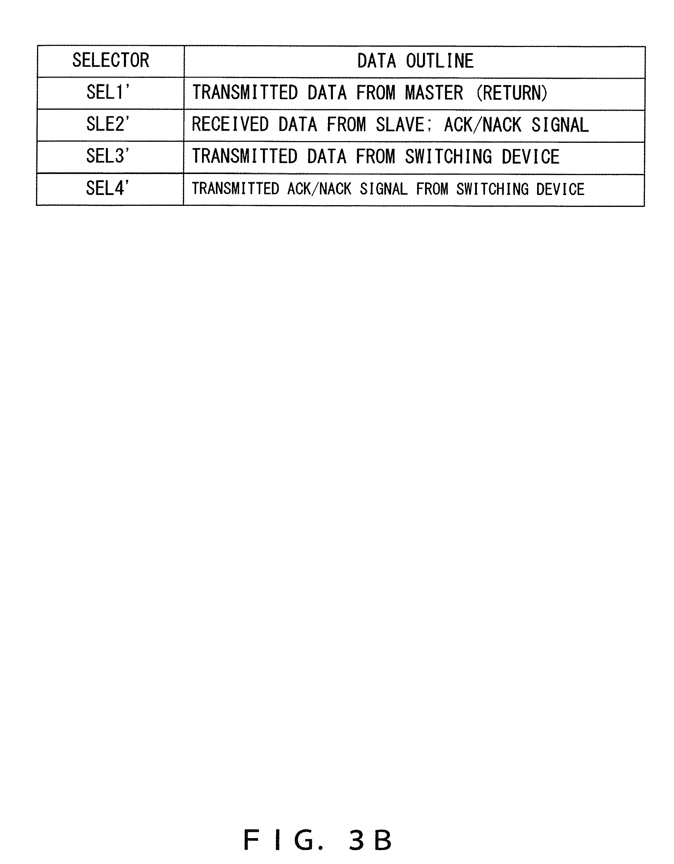

The aforementioned SEL2 to SEL4 are input to the selector 239 as SEL2' to SEL4'. The data output from the receiving buffer 231a of the transmitting and receiving unit 231 is input to the selector 239 as SEL1'. Accordingly, the data input to the selector 239 as SEL1' to SEL4' are indicated as those in FIG. 3B. The selector 239 selects one of SEL1' to SEL4' in accordance with an instruction from the monitored-data changeover unit 238. The data output from the selector 239 is input to the transmitting buffer 240 and the monitored-data changeover unit 238. The data input to the transmitting buffer 240 is transmitted to the PLD 25 via the data line for monitoring 27.

As described above, in the embodiment, the SEL1' to SEL4' depicted in FIG. 3B are transmitted to the PLD 25 in accordance with the situation. SEL1' allows a check to be conducted as to whether the switching device 23 has properly received data transmitted from the PLD 25. SEL2' allows a check to be conducted as to whether the data transmitted to the PLD 25 via the I2C bus 26 is identical with the data transmitted to the PLD 25 via the data line for monitoring 27. Similarly, SEL3' and SEL4' allow a check to be conducted as to whether the data transmitted to the PLD 25 via the I2C bus 26 is identical with the data transmitted to the PLD 25 via the data line for monitoring 27.

Next, the PLD 25 will be described in detail.

The PLD 25 is a master-side apparatus from the perspective of the switching device 23 and corresponds to a fault-spot locating apparatus in accordance with the embodiment. The transmitting and receiving unit 251 is an interface for a communication with the switching device 23. The transmitting and receiving unit 251 includes a transmitting buffer 251a to transmit data to the switching device 23 and a receiving buffer 251b to receive data from the switching device 23.

The transmitted-data storage unit 252 is a memory that stores data which the PLD 25 transmits to the switching device 23. The transmitted-data and received-data comparing unit 253 is a comparator circuit that compares the data stored in the transmitted-data storage unit 252 with the data received by the transmitting and receiving unit 251 from the switching device 23.

So that the transmitted-data and received-data comparing unit 253 can specify data to be compared with the data received from the switching device 23, the transmitted-data storage unit 252 stores data together with a device address and the address of a location at which the data is stored (hereinafter referred to as a "data address" to clarify the difference from a device address). A slave transmits the same data as data stored in the transmitted-data and received-data storage unit 252 when the master can read the data from and write the data to the slave. Thus, for what is called read-only data such as the voltage information of the power-supply controlling device 31 or the fan-rotation-number information of the fan controlling device 32 mounted in each PCI box 3 as illustrated in FIG. 1B, the transmitted-data and received-data comparing unit 253 does not virtually make a data comparison.

The PLD 25 and the switching device 23 are connected to each other via the data line for monitoring 27. The receiving buffer 254 serves to receive data transmitted from the switching device 23 via the data line for monitoring 27, such as the data illustrated in FIG. 3B. The monitored-data comparing unit 255 is a comparator circuit that compares the data received by the receiving buffer 254 with the data stored in the transmitted-data storage unit 252.

A port-address storage unit 257 is a memory that stores only a port address from among the data transmitted to the switching device 23 via the transmitting and receiving unit 251. The port-address comparing unit 256 is a comparator circuit that compares a port address received as data by the receiving buffer 254 with a port address stored in the port-address storage unit 257. In view of the fact that the port-address comparing unit 256 compares port addresses, the monitored-data comparing unit 255 addresses data other than port addresses.

The comparison results from the transmitted-data and received-data comparing unit 253, the monitored-data comparing unit 255, and the port-address comparing unit 256 are input to the determining unit 258 and, in accordance with the combination of the input comparison results, the determining unit 258 determines a spot where a fault has occurred. The PLD 25 transmits the result of the determination to the MPU 24.

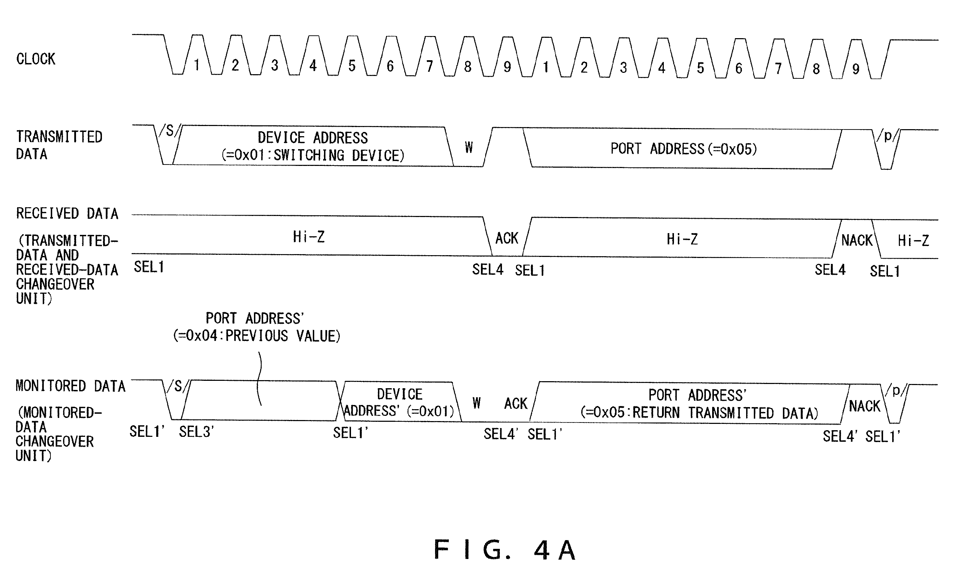

With reference to FIG. 4A to FIG. 4D, the following will specifically describe data transmitted and received between the PLD 25 and the switching device 23.

In FIG. 4A to FIG. 4D, a clock and transmitted data indicate a clock and data, both transmitted from the PLD 25 via the I2C bus 26. The received data indicates data transmitted from the switching device 23 via the I2C bus 26 and received by the PLD 25. The received data is data selected by the selector 236. Thus, the received data indicates details of selection control performed on the selector 236 by the transmitted-data and received-data changeover unit 237. The SEL1 to SEL4 in FIG. 4A to FIG. 4D indicate timings at which the transmitted-data and received-data changeover unit 237 changes the kind of data to be selected by the selector 236.

Monitored data indicates data transmitted from the switching device 23 via the data line for monitoring 27 and received by the PLD 25. The monitored data is data selected by the selector 239. Thus, the monitored data indicates details of selection control performed on the selector 239 by the monitored-data changeover unit 238. The SEL1' to SEL4' in FIG. 4A to FIG. 4D indicate timings at which the monitored-data changeover unit 238 causes the selector 239 to select the kind and the selection of data. In FIG. 4A to FIG. 4D, data indicated using "'" corresponds to data transmitted to the PLD 25 as monitored data.

"/s/" indicates a start code; "/p/", a stop code; "W", a write command; "R", a read command. Both the start code and the stop code have a signal level of L (Low). Values of 1 to 9 at the clock indicate clock numbers after transmission of the start code or clock numbers after reception of a response (ACK or NACK signal) by the PLD 25.

FIG. 4A illustrates examples of data transmitted and received between a PLD and a switching device in the designating of a port address for the switching device.

In this case the MPU 24 sequentially transmits, via the PLD 25, a start code, the device address of the switching device 23 (=0x01), a write command, a port address to be newly designated, and a stop code, in this order. The transmitted-data and received-data changeover unit 237 of the switching device 23 causes the selector 236 to select SEL1 until the write command is received, and, after the write command is received, the transmitted-data and received-data changeover unit 237 causes the selector 236 to select SEL 4 for the period of one clock cycle. After the period of one cycle elapses, the transmitted-data and received-data changeover unit 237 causes the selector 236 to select SEL1 until the reception of the port address is completed, and, after the reception of the port address is completed, the transmitted-data and received-data changeover unit 237 causes the selector 236 to select SEL4 for the period of one clock cycle. Then, transmitted-data and received-data changeover unit 237 causes the selector 236 to select SEL1.

The ACK signal generated by the ACK/NACK signal generating unit 235 is transmitted to the PLD 25 via the selector 236 selecting SEL4. Verifying the ACK signal, the MPU 24 outputs a port address that designates a port 232 to be subsequently enabled.

Inputting a start code to the port-address selector 234 via, for example, the reception selector 233 causes the port-address selector 234 to output the port address of a port 232 by which a communication is currently enabled. The output port address corresponds to one hexadecimal digit.

After receiving the start code, the monitored-data changeover unit 238 changes over the data to be selected by the selector 239 from SEL1' to SEL3'. After the port-address selector 234 finishes outputting the port address corresponding to one hexadecimal digit, the monitored-data changeover unit 238 changes over the data to be selected by the selector 239 from SEL3' to SEL1'. Accordingly, one hexadecimal digit of the received device address and the write command are returned to the PLD 25.

After receiving the write command, the monitored-data changeover unit 238 changes over the data to be selected by the selector 239 from SEL1' to SEL4' for the period of one clock cycle and then causes the selector 239 to select SEL1' again. Accordingly, the monitored-data changeover unit 238 returns the received port address to the PLD 25. After the port address is transmitted, the monitored-data changeover unit 238 causes the selector 239 to select SEL4' for the period of one clock cycle and then causes the selector 239 to select SEL1'.

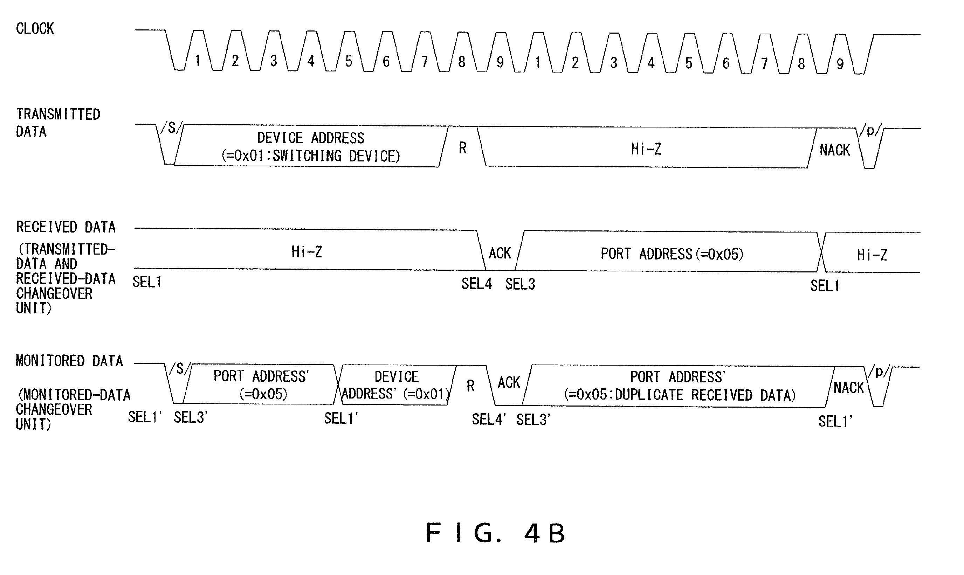

FIG. 4B illustrates examples of data transmitted and received between a PLD and a switching device in the reading of a port address designated for the switching device. This example is based on the assumption that the reading of a port address is performed after a port address (=0x05) is designated (written) for the switching device 23 as illustrated in FIG. 4A.

In this case the MPU 24 transmits, via the PLD 25, a start code, the device address of the switching device 23 (=0x01), a read command, NACK signal, and a stop code in this order. The transmitted-data and received-data changeover unit 237 of the switching device 23 causes the selector 236 to select SEL1 until the read command is received, and, after the read command is received, the transmitted-data and received-data changeover unit 237 causes the selector 236 to select SEL 4 for the period of one clock cycle.

Inputting a start code to the port-address selector 234 via, for example, the reception selector 233 causes the port-address selector 234 to output the port address of a port 232 by which a communication is currently enabled. In response to the reception of the read command, the port-address selector 234 outputs to the selectors 236 and 239 the port address of the port 232 by which a communication is currently enabled. Accordingly, after the period of one clock cycle elapses since the transmitted-data and received-data changeover unit 237 caused SEL4 to be selected, the transmitted-data and received-data changeover unit 237 causes the selector 236 to select SEL3 until the outputting of the port address is completed; after the outputting of the port address is completed, the transmitted-data and received-data changeover unit 237 causes the selector 236 to select SEL1.

Receiving the port address, the MPU 24 transmits NACK signal and, subsequently, a stop code. Accordingly, the NACK signal after the read command is transmitted after the reception of the port address.

After receiving the start code, the monitored-data changeover unit 238 changes over the data to be selected by the selector 239 from SEL1' to SEL3'. After the port-address selector 234 finishes outputting the port address corresponding to one hexadecimal digit, the monitored-data changeover unit 238 changes over the data to be selected by the selector 239 from SEL3' to SEL1'. Accordingly, one hexadecimal digit of the received device address and the write command are returned to the PLD 25.

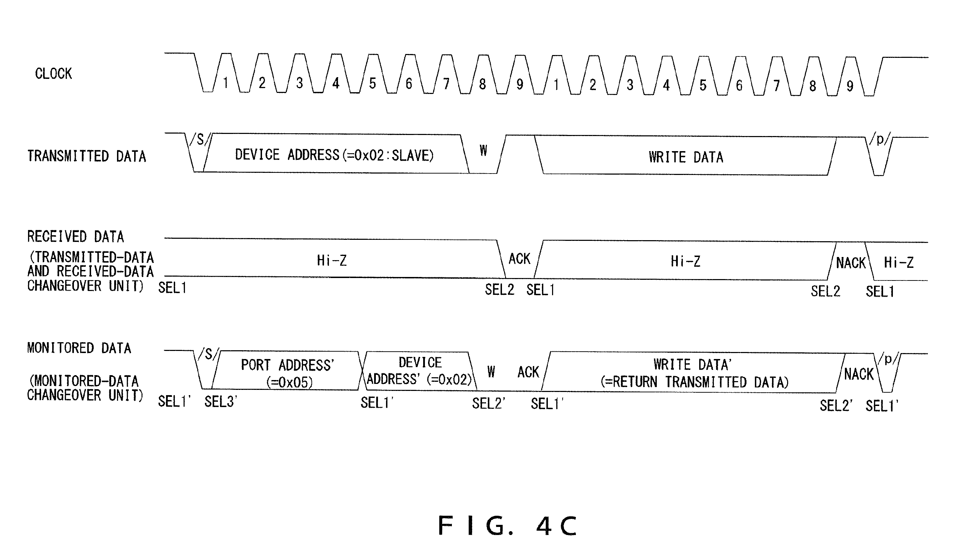

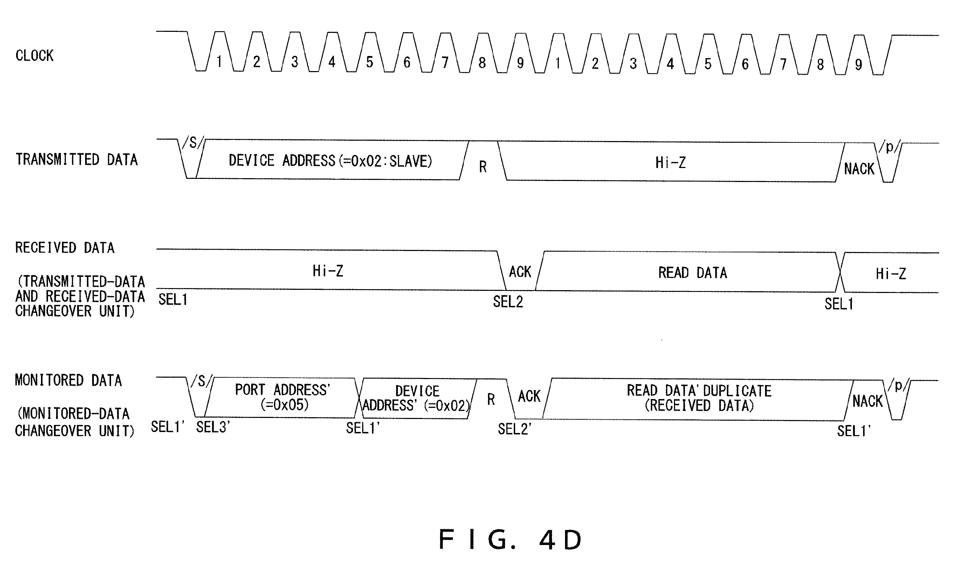

As described above, in the embodiment, received data and a port address are transmitted via the data line for monitoring 27 to the switching device 23, which has received data ranging from a start code to a command. This aims to check whether a data communication from the PLD 25 to the switching device 23 is being properly performed and to check whether the switching device 23 is being properly operated. To make such checks, in the cases depicted by FIG. 4C and FIG. 4D, data is also transmitted from the switching device 23 to the PLD 25 via the data line for monitoring 27.

After receiving the read command, the monitored-data changeover unit 238 changes over the data to be selected by the selector 239 from SEL1' to SEL4' for the period of one clock cycle and then causes the selector 239 to select SEL3'. Accordingly, the monitored-data changeover unit 238 causes the port address output by the port-address selector 234 to be transmitted to the PLD 25. After the port address is transmitted, the monitored-data changeover unit 238 causes the selector 239 to select SEL1'.

The monitored-data changeover unit 238 causes the selector 239 to select SEL4', thereby causing identical pieces of data (ACK signals in the cases illustrated in FIG. 4A and FIG. 4B) to be transmitted from the switching device 23 to the PLD 25 via the I2C bus 26 and via the data line for monitoring 27. In this manner, identical pieces of data are transmitted via the I2C bus 26 and via the data line for monitoring 27 so that it can be checked whether a data communication from the switching device 23 to the PLD 25 is being properly performed and whether the switching device 23 is being properly operated.

FIG. 4C illustrates examples of data transmitted and received between a PLD and a switching device in the writing of data to a slave. FIG. 4D illustrates examples of data transmitted and received between a PLD and a switching device in the reading of data from a slave. The cases depicted in FIG. 4C and FIG. 4D will be described only to bring out differences from the cases depicted in FIG. 4A and FIG. 4B.

In the cases illustrated in FIG. 4A and FIG. 4B, which are directed to the switching device 23, the selectors 236 and 239 do not select SEL2 or SEL2'. However, in the cases illustrated in FIG. 4C and FIG. 4D, which are directed to a slave, the selectors 236 and 239 select SEL2 and SEL2'. In the cases depicted in FIG. 4C and FIG. 4D, the selector 236 is caused to select SEL2 in, for example, the situation of the cases depicted in FIG. 4A and FIG. 4B in which the selector 236 would select SEL3 or SEL4.

In the case depicted in FIG. 4C, after receiving a write command, the transmitted-data and received-data changeover unit 237 causes the selector 236 to select SEL2. After receiving a write command, the monitored-data changeover unit 238 causes the selector 239 to select SEL2'.

Selecting SEL2 causes the MPU 24, which has checked the ACK signals transmitted from a slave, to transmit data to be written to the slave (write data). After the reception (transfer) of the write data is completed, the transmitted-data and received-data changeover unit 237 causes the selector 236 to select SEL2. After the reception of the write data is completed, the monitored-data changeover unit 238 causes the selector 239 to select SEL2'.

In the case depicted in FIG. 4D, after receiving a read command, the transmitted-data and received-data changeover unit 237 causes the selector 236 to select SEL2. After receiving a read command, the monitored-data changeover unit 238 causes the selector 239 to select SEL2'.

Data addressed to the slave is output to each port 232 via the reception selector 233. The port-address selector 234 enables a port selection signal for only a port 232 designated by a port address. Thus, the slave designated by a device address receives data and transmits requested data via a port 232 to which the enabled port selection signal has been output. After the reception (transfer) of the data from the slave is completed, the transmitted-data and received-data changeover unit 237 changes over the data to be selected by the selector 236 from SEL2 to SEL1. After the reception (transfer) of data from the slave is completed, the monitored-data changeover unit 238 changes over the data to be selected by the selector 239 from SEL2' to SEL1'.

As described above, the data line for monitoring 27 is used to transmit data such as that depicted in FIG. 3B from the switching device 23 to the PLD 25. Such data is transmitted irrespective of what object the MPU 24 communicates with via the PLD 25. Hence, irrespective of what object the PLD 25 communicates with, the PLD 25 may obtain, via the data line for monitoring 27, data to locate a spot where a fault has occurred. This allows a spot where a fault has occurred to be located without providing a feedback circuit to monitor a communication performed via the I2C bus 4 that connects each port 232 and a slave to each other. A feedback circuit and a circuit or the like to be provided for each feedback circuit become unnecessary, which may more effectively suppress the cost needed to locate a spot where a fault has occurred.

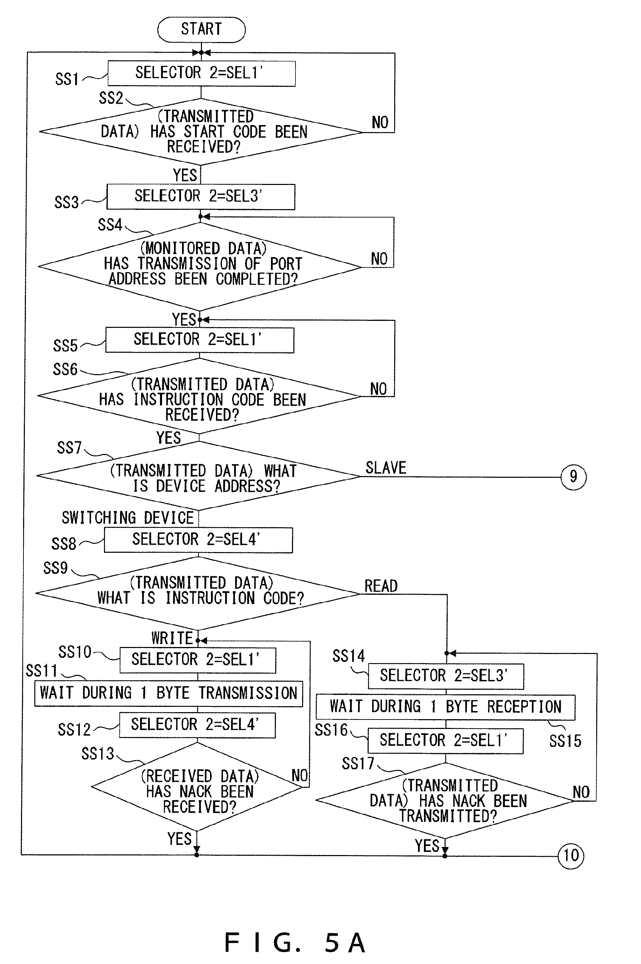

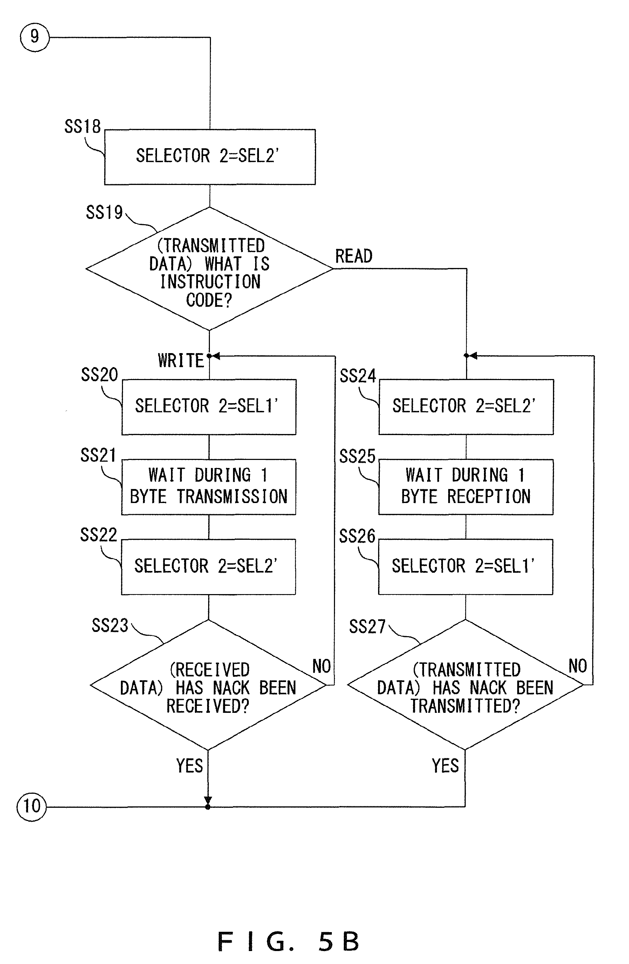

Next, with reference to the flowcharts illustrated in FIG. 5 to FIG. 7, detailed descriptions will be given of operations of the switching device 23 and the PLD 25.

FIG. 5A and FIG. 5B are a flowchart illustrating the flow of an operation of a monitored-data changeover unit mounted in a switching device. First, with reference to FIG. 5 A and FIG. 5B, an operation of the monitored-data changeover unit 238 will be described in detail. In FIG. 5 A and FIG. 5B, the selector 239 is indicated as a "selector 2". The " (transmitted data)", "(received data)", and "(monitored data)" respectively indicate the data output from the transmitting and receiving unit 231, the data output from the selector 236, and the data output from the selector 239.

Data transmission via the data line for monitoring 27 is performed under the control of the monitored-data changeover unit 238. Accordingly, the monitored-data changeover unit 238 will be focused on to describe the operation of the switching device 23 with reference to the flowchart.

The monitored-data changeover unit 238 ordinarily causes the selector 239 to select SEL1' (SS1→SS2; No→SS1). In this state, when the transmitting and receiving unit 231 receives a start code (SS2: YES), the monitored-data changeover unit 238 causes the selector 239 to select SEL3' (SS3). Until the port-address selector 234 ends the output of a port address (SS4: YES), the monitored-data changeover unit 238 maintains a state in which the selector 239 selects SEL3'.

When the port-address selector 234 ends the output of a port address (SS4: YES), the monitored-data changeover unit 238 causes the selector 239 to select SEL1' (SS5). Until the transmitting and receiving unit 231 outputs a command (indicated as an "instruction code" in FIG. 5 A and FIG. 5B) (SS6: YES), the monitored-data changeover unit 238 maintains a state in which the selector 239 selects SEL1'.

After a command is input, the monitored-data changeover unit 238 determines a device to which a device address input prior to the command is assigned (SS7). When the device address is a device address assigned to the switching device 23 itself, (this fact is determined in SS7), shifting the process to SS8. When the device address is not a device address assigned to the switching device 23 itself, i.e., when the device address is the one assigned to any of the slaves, (this fact is determined in SS7), shifting the process to SS18.

In SS8, the monitored-data changeover unit 238 causes the selector 239 to select SEL4'. Next, the monitored-data changeover unit 238 determines the type of the received command (SS9). When the transmitting and receiving unit 231 receives a write command, (this fact is determined in SS9), shifting the process to SS10. When the transmitting and receiving unit 231 receives a read command, (this fact is determined in SS9), shifting the process to SS14.

In SS10, the monitored-data changeover unit 238 waits for the period of one clock cycle to elapse after the monitored-data changeover unit 238 has caused the selector 239 to select SEL4', and then causes the selector 239 to select SEL1'. For the period of eight clock cycles, the monitored-data changeover unit 238 maintains a state in which the selector 239 selects SEL1' (SS11). When that period has elapsed, the monitored-data changeover unit 238 causes the selector 239 to select SEL4' (SS12). Subsequently, the monitored-data changeover unit 238 determines whether the transmitting and receiving unit 231 has had NACK signal from the selector 236 input thereto (SS13). When the transmitting and receiving unit 231 has not had NACK signal from the selector 236 input thereto, a judgment of NO is indicated in SS13, returning the process to SS10. This makes the monitored-data changeover unit 238 ready for the reception of additional data by the transmitting and receiving unit 231. Meanwhile, when the transmitting and receiving unit 231 has had NACK signal from the selector 236 input thereto, a judgment of YES is indicated in SS13, the process to SS1. This makes the monitored-data changeover unit 238 ready for the reception of a next start code by the transmitting and receiving unit 231.

In SS14, i.e., a step to which the process shifts when a read command is determined in SS9, the monitored-data changeover unit 238 waits for the period of one clock cycle to elapse after the monitored-data changeover unit 238 has caused the selector 239 to select SEL4', and then causes the selector 239 to select SEL3'. For the period of eight clock cycles, the monitored-data changeover unit 238 maintains a state in which the selector 239 selects SEL3' (SS15). When that period has elapsed, the monitored-data changeover unit 238 causes the selector 239 to select SEL1' (SS16). Subsequently, the monitored-data changeover unit 238 determines whether the transmitting and receiving unit 231 has output NACK signal (SS17). When the transmitting and receiving unit 231 has not received NACK signal from the PLD 25, a judgment of NO is indicated in SS17, the process to SS14. This makes the monitored-data changeover unit 238 ready for the transmission of additional data by the MPU 24 via the PLD 25. Meanwhile, when the transmitting and receiving unit 231 has received NACK signal, a judgment of YES is indicated in SS17, returning the process to SS1. This makes the monitored-data changeover unit 238 ready for the reception of a next start code by the transmitting and receiving unit 231.

In SS18, i.e., a step to which the process shifts when a device address is judged to be the one assigned to any of the slaves in SS7, the monitored-data changeover unit 238 causes the selector 239 to select SEL2'. Next, the monitored-data changeover unit 238 determines the type of a received command (SS19). When the transmitting and receiving unit 231 receives a write command, (this fact is determined in SS19), the process to SS20. When the transmitting and receiving unit 231 receives a read command, (this fact is determined in SS19), shifting the process to SS24.

In SS20, the monitored-data changeover unit 238 waits for the period of one clock cycle to elapse after the monitored-data changeover unit 238 has caused the selector 239 to select SEL2' in SS18, and then causes the selector 239 to select SEL1'. For the period of eight clock cycles, the monitored-data changeover unit 238 maintains a state in which the selector 239 selects SEL1' (SS21). When that period has elapsed, the monitored-data changeover unit 238 causes the selector 239 to select SEL2' (SS22). Subsequently, the monitored-data changeover unit 238 determines whether the transmitting and receiving unit 231 has had NACK signal from the selector 236 input thereto (SS23). When the transmitting and receiving unit 231 has not had NACK signal from the selector 236 input thereto, a judgment of NO is indicated in SS23, the process to SS20. This makes the monitored-data changeover unit 238 ready for the reception of additional data from the slave via the port 232. Meanwhile, when the transmitting and receiving unit 231 has had NACK signal from the selector 236 input thereto, a judgment of YES is indicated in SS23, returning the process to SS1. This makes the monitored-data changeover unit 238 ready for the reception of a next start code by the transmitting and receiving unit 231.

In SS24, i.e., a step to which the process shifts when a read command is determined in SS19, the monitored-data changeover unit 238 causes the selector 239 to continue to select SEL2'. For the period of eight clock cycles plus one clock cycle after the monitored-data changeover unit 238 has caused the selector 239 to select SEL2'in SS18, the monitored-data changeover unit 238 maintains a state in which the selector 239 selects SEL2' (SS25). When the period has elapsed, the monitored-data changeover unit 238 causes the selector 239 to select SEL1' (SS26). Then, the monitored-data changeover unit 238 determines whether the transmitting and receiving unit 231 has output NACK signal (SS27). When the transmitting and receiving unit 231 has not received signal NACK from the PLD 25, a judgment of NO is indicated in SS27, the process to SS24. This makes the monitored-data changeover unit 238 ready for the transmission of additional data by the MPU 24 via the PLD 25. Meanwhile, when the transmitting and receiving unit 231 has received NACK signal, a judgment of YES is indicated in SS27, returning the process to SS1. This makes the monitored-data changeover unit 238 ready for the reception of a next start code by the transmitting and receiving unit 231.

The monitored-data changeover unit 238 is operated as described above. Consequently, data such as those depicted in FIG. 4A to FIG. 4D are transmitted from the switching device 23 to the PLD 25 via the data line for monitoring 27.

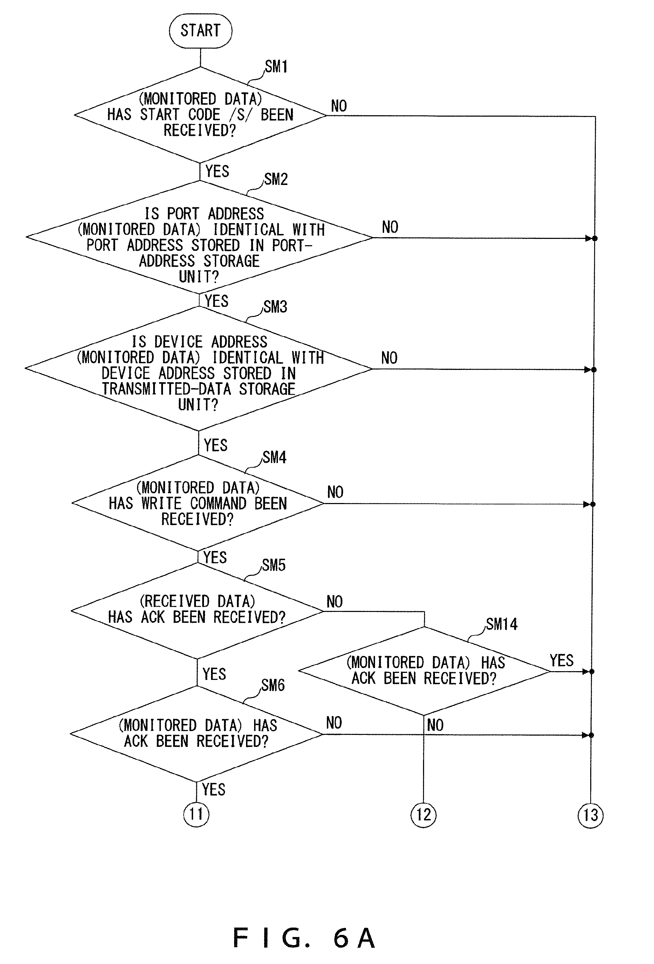

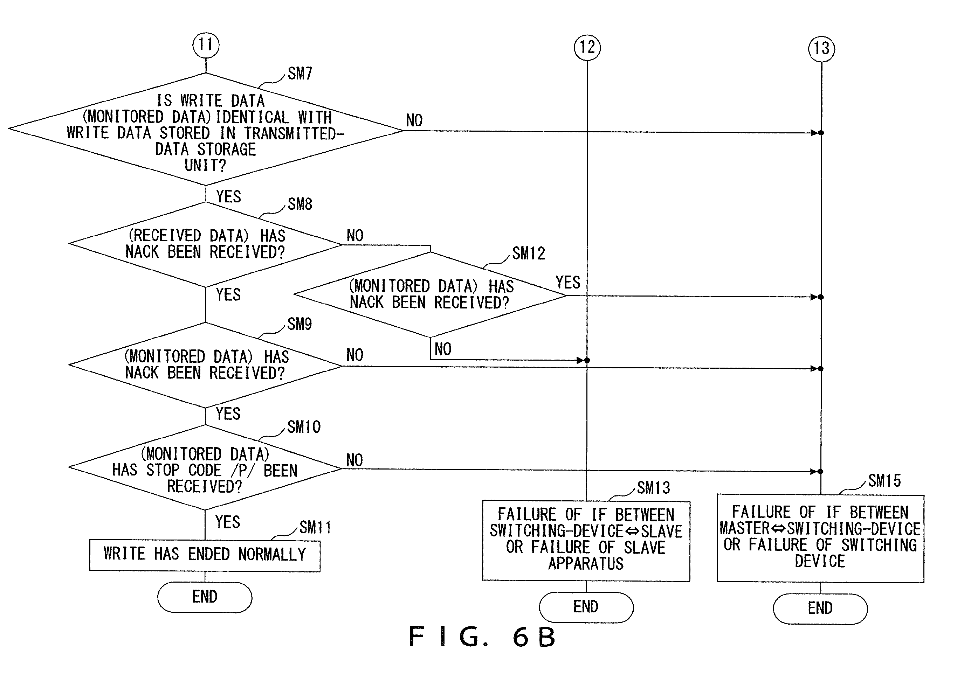

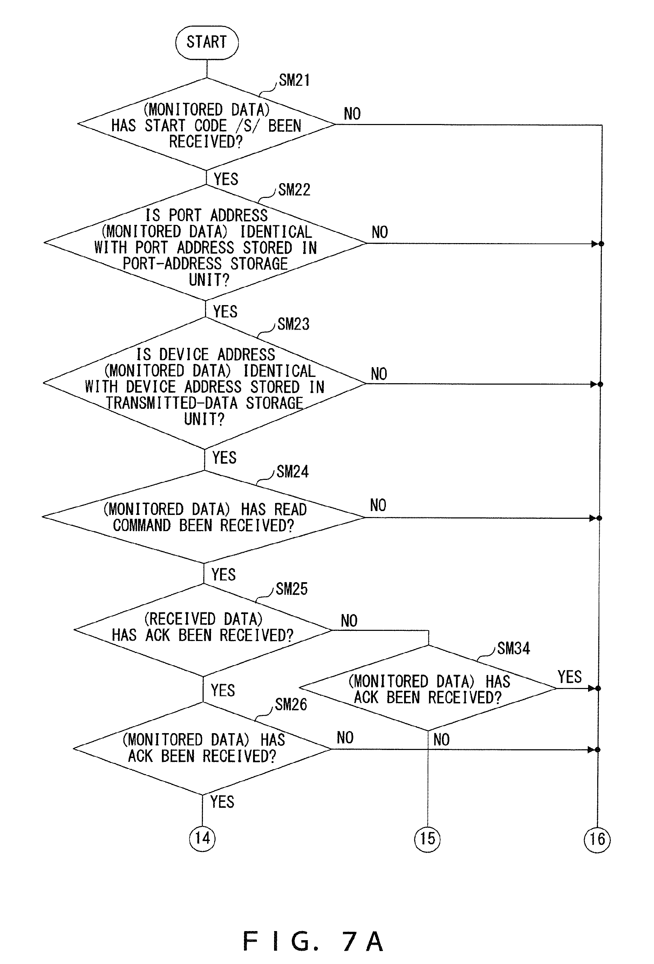

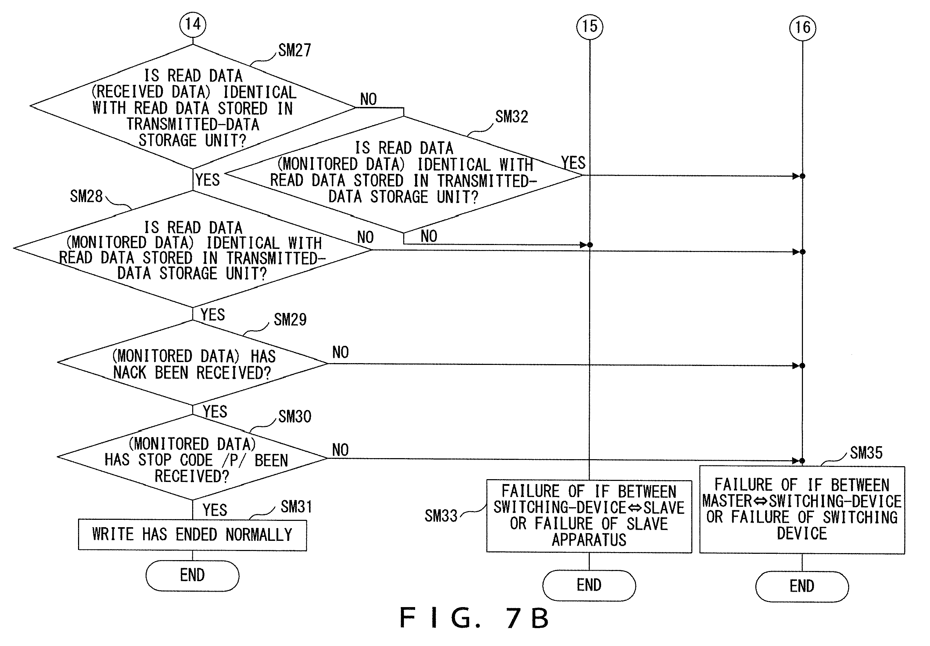

FIG. 6 A and FIG. 6B are a flowchart illustrating an operation of a PDL performed in the transmitting of a write command. FIG. 6 A and FIG. 6B illustrate the flow of the operation by focusing on the transmitted-data and received-data comparing unit 253, the monitored-data comparing unit 255, the port-address comparing unit 256, and the determining unit 258, all of which are mounted in the PLD 25. With reference to FIG. 6 A and FIG. 6B, the following will describe in detail the operation of the PLD 25 performed in the transmitting of a write command. In FIG. 6(FIG. 6 A and FIG. 6B) and FIG. 7(FIG. 7A and FIG. 7B), which will be described hereinafter, "(received data)" and " (monitored data) " respectively indicate data output from the transmitting and receiving unit 231 and data output from the receiving buffer 254.

As illustrated in FIG. 4A to FIG. 4D, a start code transmitted from the PLD 25 to the switching device 23 is returned from the switching device 23 to the PLD 25 via the data line 27 for monitoring. Elements 252 and 253 and elements 255 to 258 mounted in the PLD 25, including, for example, the transmitted-data and received-data comparing unit 253, the monitored-data comparing unit 255, the port-address comparing unit 256, and the determining unit 258, start operations in response to, for example, the transmission of the start code. This causes the transmitted-data storage unit 252 and the port-address storage unit 257 to store data that needs to be stored.

The transmitted-data and received-data comparing unit 253, the monitored-data comparing unit 255, the port-address comparing unit 256, and the determining unit 258 are operated independently from each other. However, FIG. 6(FIG. 6 A and FIG. 6B) and FIG. 7 (FIG. 7A and FIG. 7B), which will be described hereinafter, depict the flow of operations in the form of a flowchart such that a fault spot located in accordance with the results of respective determinations made by the transmitted-data and received-data comparing unit 253, the monitored-data comparing unit 255, and the port-address comparing unit 256 can be readily realized by the determining unit 258.

The monitored-data comparing unit 255 monitors a start code output from the receiving buffer 254 and determines whether the start code has been output from the receiving buffer 254 (SM1). When the receiving buffer 254 has received the start code, the received start code is output to the monitored-data comparing unit 255, and hence the determination made by the monitored-data comparing unit 255 in SM1 indicates a judgment of YES, thereby shifting the process to SM2. When the receiving buffer 254 does not receive the start code, the determination made by the monitored-data comparing unit 255 in SM1 indicates a judgment of NO, thereby shifting the process to SM15.

The monitored-data comparing unit 255 reports to the determining unit 258 that a start code was not output from the receiving buffer 254. The inability of at least one of the I2C bus 26 or the data line for monitoring 27 to allow data to be properly transmitted or received, or a fault within the switching device 23 leads to an event wherein a start code is not output from the receiving buffer 254. Accordingly, in SM15, the determining unit 258 reports to the MPU 24 that at least one of a fault in the communication performed via the I2C bus 26 or the data line for monitoring 27 (depicted as "FAILURE OF IF BETWEEN MASTER ⇔ SWITCHING-DEVICE" in FIG. 6A and FIG. 6B) or a fault within the switching device 23 has occurred. This report ends an operation series related to the locating of a fault spot.

In SM2, the port-address comparing unit 256 determines whether a port address that the receiving buffer 254 outputs subsequently to the start code is identical with a port address stored in the port-address storage unit 257. When these addresses are identical with each other, the determination made by the port-address comparing unit 256 in SM2 indicates a judgment of YES, thereby shifting the process to SM3. When these addresses are not identical with each other, the determination made by the port-address comparing unit 256 in SM2 indicates a judgment of NO, thereby shifting the process to SM15. Hence, the determining unit 258 reports to the MPU 24 that at least one of a fault in the communication performed via the I2C bus 26 or the data line for monitoring 27, or a fault within the switching device 23 has occurred.

In SM3, the monitored-data comparing unit 255 determines whether a device address that the receiving buffer 254 outputs subsequently to the port address is identical with the device address stored just before in the transmitted-data storage unit 252. When these addresses are identical with each other, the determination made by the monitored-data comparing unit 255 in SM3 indicates a judgment of YES, thereby shifting the process to SM4. When these addresses are not identical with each other, the determination made by the monitored-data comparing unit 255 in SM3 indicates a judgment of NO, thereby shifting the process to SM15.

In SM4, the monitored-data comparing unit 255 determines whether the receiving buffer 254 has output a write command subsequently to the device address. When the receiving buffer 254 has output a write command subsequently to the device address, the determination made by the monitored-data comparing unit 255 in SM4 indicates a judgment of YES, thereby shifting the process to SM5. When the receiving buffer 254 has not output a write command subsequently to the device address, the determination made by the monitored-data comparing unit 255 in SM4 indicates a judgment of NO, thereby shifting the process to SM15.

In SM5, the transmitted-data and received-data comparing unit 253 determines whether the transmitting and receiving unit 251 has output ACK signal. When ACK signal has been transmitted from the switching device 23 via the I2C bus 26, the transmitting and receiving unit 251 outputs ACK signal, and hence the determination made by the transmitted-data and received-data comparing unit 253 in SM5 indicates a judgment of YES, thereby shifting the process to SM6. When the transmitting and receiving unit 251 has not received ACK signal, the determination made by the transmitted-data and received-data comparing unit 253 in SM5 indicates a judgment of NO, thereby the process to SM14.

In SM14, the monitored-data comparing unit 255 determines whether the receiving buffer 254 has output ACK signal. When ACK signal has been transmitted from the switching device 23 via the data line for monitoring 27, the receiving buffer 254 outputs ACK signal, and hence the determination made by the monitored-data comparing unit 255 in SM14 indicates a judgment of YES, thereby shifting the process to SM15. When the receiving buffer 254 has not received ACK signal, the determination made by the monitored-data comparing unit 255 in SM14 indicates a judgment of NO, thereby shifting the process to SM13.

A judgment of YES in SM14 means that an event has occurred wherein data transmitted from the switching device 23 via the I2C bus 26 and data transmitted from the switching device 23 via the data line for monitoring 27 that is supposed to be identical with the former data are not identical with each other. This event indicates that at least one of a fault in a communication performed via the I2C bus 26 or the data line for monitoring 27, or a fault within the switching device 23 may have possibly occurred. This event may be caused by a malfunction of the switching device 23. Accordingly, a judgment of YES is indicated in SM14, thereby shifting the process to SM15.

Meanwhile, a judgment of NO in SM14 means that an event has occurred wherein data transmitted from the switching device 23 via the I2C bus 26 and data transmitted from the switching device 23 via the data line for monitoring 27 that is supposed to be identical with the former data are identical with each other. Accordingly, a fault in a communication performed via the I2C bus 26 or the data line for monitoring 27 is not likely to have occurred. It is also highly likely that the switching device 23 itself is being properly operated. By contrast, when a fault has occurred in a communication performed between the switching device 23 and a slave via the I2C bus 4, or a fault has occurred in the slave itself, it is highly likely that the switching device 23 is incapable of receiving ACK signal from the slave. Accordingly, in SM13, the determining unit 258 reports to the MPU 24 that at least one of a fault in the communication performed between the switching device 23 and the slave via the I2C bus 4 (depicted as "FAILURE OF IF BETWEEN SWITCHING-DEVICE ⇔SLAVE" in FIG. 6A and FIG. 6B) or a fault within the slave itself has occurred. This report ends an operation series related to the locating of a fault spot.

In SM6, the monitored-data comparing unit 255 determines whether the receiving buffer 254 has output ACK signal, as in the case of SM14. When ACK signal has been transmitted from the switching device 23 via the data line for monitoring 27, the receiving buffer 254 outputs ACK signal, and hence the determination made by the monitored-data comparing unit 255 in SM6 indicates a judgment of YES, thereby shifting the process to SM7. When the receiving buffer 254 has not received ACK signal, the determination made by the monitored-data comparing unit 255 in SM6 indicates a judgment of NO, thereby shifting the process to SM15. The process shifts to SM15 because a fault that is similar to the fault in the case of a judgment of YES in SM14 can be judged to have occurred.

When a command transmitted from the PLD 25 to the switching device 23 is a write command, the receiving buffer 254 receives write data subsequent to ACK signal. In SM7, the monitored-data comparing unit 255 determines whether the write data output by the receiving buffer 254 is identical with write data stored in the transmitted-data storage unit 252. When these pieces of write data are identical with each other, the determination made by the monitored-data comparing unit 255 in SM7 indicates a judgment of YES, thereby shifting the process to SM8. When these pieces of write data are not identical with each other, the determination made by the monitored-data comparing unit 255 in SM7 indicates a judgment of NO, thereby shifting the process to SM15.

A judgment of NO in SM7 indicates that a fault may have possibly occurred in a communication from the PLD 25 to the switching device 25 performed via the I2C bus 26 or in a communication from the switching device 23 to the PLD 25 performed via the data line for monitoring 27. Write data may also have failed to be properly transmitted from the switching device 23. Accordingly, a judgment of NO is indicated in SM7, thereby the process to SM15.

As described above, after completing the reception of write data, the switching device 23 transmits NACK signal via the I2C bus 26. In SM8, the transmitted-data and received-data comparing unit 253 determines whether the transmitting and receiving unit 251 has output NACK signal. When the transmitting and receiving unit 251 receives NACK signal, the transmitting and receiving unit 251 outputs the received NACK signal, and hence, the determination made by the transmitted-data and received-data comparing unit 253 in SM8 indicates a judgment of YES, thereby shifting the process to SM9. When the transmitting and receiving unit 251 does not receive NACK signal, the determination made in SM8 by the transmitted-data and received-data comparing unit 253 indicates a judgment of NO, thereby the process to SM12.

In SM12, the monitored-data comparing unit 255 determines whether the receiving buffer 254 has output NACK signal. When the receiving buffer 254 receives NACK signal, the receiving buffer 254 outputs the received NACK signal, and hence, the determination made in SM12 by the monitored-data comparing unit 255 indicates a judgment of YES, thereby the process to SM15. When the receiving buffer 254 does not receive NACK signal, the determination made in SM12 by the monitored-data comparing unit 255 indicates a judgment of NO, thereby shifting the process to SM13.

In SM9, the monitored-data comparing unit 255 determines whether the receiving buffer 254 has output NACK signal. When the receiving buffer 254 receives NACK signal, the receiving buffer 254 outputs the received NACK signal, and hence, the determination made in SM9 by the monitored-data comparing unit 255 indicates a judgment of YES, thereby shifting the process to SM10. When the receiving buffer 254 does not receive NACK signal, the determination made in SM9 by the monitored-data comparing unit 255 indicates a judgment of NO, thereby the process to SM15.

A judgment of YES in SM12 and a judgment of NO in SM9 indicate that a fault may have possibly occurred in a communication from the switching device 25 to the PLD 25 performed via the I2C bus 26 or in a communication from the switching device 23 to the PLD 25 performed via the data line for monitoring 27. In addition, the switching device 23 may have failed to cause the selector 236 or 239 to properly select NACK signal. Accordingly, a judgment of YES is indicated in SM12 or a judgment of NO is indicated in SM9, thereby the process to SM15.

A judgment of NO in SM12 indicates that a fault is not likely to have occurred in a communication from the switching device 25 to the PLD 25 performed via the I2C bus 26 or in a communication from the switching device 23 to the PLD 25 performed via the data line for monitoring 27. It is also highly likely that the switching device 23 is being properly operated. This leads to the judgment that the switching device 23 is likely to have been unable to receive NACK signal. The reasons for the inability of the switching device 23 to receive NACK signal may be, for example, the occurrence of a fault (failure) in a slave device itself , or a fault which may have or turned in a communication between the switching device 23 and the slave device. Accordingly, a judgment of NO is indicated in SM12, thereby the process to SM13.

In SM10, the monitored-data comparing unit 255 determines whether the receiving buffer 254 has output a stop code. When the receiving buffer 254 has output a stop code, the determination made by the monitored-data comparing unit 255 in SM10 indicates a judgment of YES, thereby shifting the process to SM11. When the receiving buffer 254 has not output a stop code, the determination made by the monitored-data comparing unit 255 in SM10 indicates a judgment of NO, thereby shifting the process to SM15.

As illustrated in FIG. 4A to FIG. 4D, a stop code is transmitted from the switching device 23 to the PLD 25 via the data line for monitoring 27 only. Accordingly, a judgment of NO in SM10 leads to the shifting of the process to SM15 in view of the fact that it is highly likely that a fault has occurred in a communication from the switching device 23 to the PLD 25 performed via the data line for monitoring 27 or in the switching device 23 itself.

The shift to SM11 indicates that a fault is unlikely to have occurred. Hence, in SM11, the determining unit 258 determines that both the transmitting of a write command and the processing of the transmitted write command have been ended normally, and reports the result of the determination to the MPU 24. This report ends an operation series related to the locating of a fault spot.

FIG. 7A and FIG. 7B are a flowchart illustrating an operation of a PDL performed in the transmitting of a read command. As with FIG. 6A and FIG. 6B, FIG. 7A and FIG. 7B illustrate the flow of the operation by focusing on the transmitted-data and received-data comparing unit 253, the monitored-data comparing unit 255, the port-address comparing unit 256, and the determining unit 258, all of which are mounted in the PLD 25. Finally, with reference to FIG. 7A and FIG. 7B, the following will describe in detail an operation of the PLD 25 performed in the transmitting of a read command.

In FIG. 7A and FIG. 7B, the processes performed in SM21-SM23, SM25, SM26, SM30, SM31, and SM33-SM35 are basically the same as those in SM1-SM3, SM5, SM6, SM10, SM11, and SM13-SM15 in FIG. 6A and FIG. 6B. Thus, FIG. 7A and FIG. 7B will be described by focusing on differences from FIG. 6 A and FIG. 6B.

In SM24, i.e., a step to which the process shifts when the determination made by the monitored-data comparing unit 255 indicates a judgment of YES in SM23, the monitored-data comparing unit 255 determines whether the receiving buffer 254 has output a read command. When the receiving buffer 254 has output a read command, the determination made by the monitored-data comparing unit 255 in SM24 indicates a judgment of YES, thereby shifting the process to SM25. When the receiving buffer 254 has not output a read command, the determination made by the monitored-data comparing unit 255 in SM24 indicates a judgment of NO, thereby shifting the process to SM35.

As illustrated in FIG. 4B and FIG. 4D, a read command transmitted from the PLD 25 to the switching device 23 is returned from the switching device 23 to the PLD 25 via the data line for monitoring 27. This indicates that a fault may possibly have occurred in a communication from the PLD 25 to the switching device 23 performed via the I2C bus 26 or in a communication from the switching device 23 to the PLD 25 performed via the data line for monitoring 27. A fault may also have possibly occurred in the switching device 23 itself. Accordingly, in SM35, the determining unit 258 reports this fact to the MPU 24. This report ends an operation series related to the locating of a fault spot.

The process shifts to SM27 when the determination made by the monitored-data comparing unit 255 in SM26 indicates a judgment of YES. In SM27, the transmitted-data and received-data comparing unit 253 determines whether read data output from the transmitting and receiving unit 251 is identical with corresponding data stored in the transmitted-data storage unit 252. When those pieces of data are identical with each other, the determination made by the transmitted-data and received-data comparing unit 253 in SM27 indicates a judgment of YES, thereby shifting the process to SM28. When those pieces of data are not identical with each other, the determination made by the transmitted-data and received-data comparing unit 253 in SM27 indicates a judgment of NO, thereby shifting the process to SM32.

In SM32, the monitored-data comparing unit 255 determines whether read data output from the receiving buffer 254 is identical with corresponding data stored in the transmitted-data storage unit 252. When those pieces of data are identical with each other, the determination made by the monitored-data comparing unit 255 in SM32 indicates a judgment of YES, thereby shifting the process to SM35. When those pieces of data are not identical with each other, the determination made by the monitored-data comparing unit 255 in SM32 indicates a judgment of NO, thereby shifting the process to SM33.

In SM28, the monitored-data comparing unit 255 determines whether read data output from the receiving buffer 254 is identical with corresponding data stored in the transmitted-data storage unit 252. When those pieces of data are identical with each other, the determination made by the monitored-data comparing unit 255 in SM28 indicates a judgment of YES, thereby shifting the process to SM29. When those pieces of data are not identical with each other, the determination made by the monitored-data comparing unit 255 in SM28 indicates a judgment of NO, thereby shifting the process to SM35.

A judgment of YES in SM32 and a judgment of NO in SM28 respectively indicate that pieces of read data transmitted from the switching device 23 to the PLD 25 via the I2C bus 26 and the data line for monitoring 27 are different. This means that a fault could have possibly occurred in at least one of the communication performed via the I2C bus 26 or the communication performed via the data line for monitoring 27. In the case that the switching device 23 was not able to properly transmit the two pieces of read data, two pieces of respectively transmitted read data may be judged to be different. Accordingly, the process shifts to SM35 in response to a judgment of YES in SM32 or a judgment of NO in SM28.

A judgment of NO in SM32 indicates that a fault is unlikely to have occurred in the communication from the switching device 23 to the PLD 25 performed via the I2C bus 26 or the communication from the switching device 23 to the PLD 25 performed via the data line for monitoring 27. The switching device 23 is also likely to be being properly operated. This leads to a judgment that the switching device 23 is likely to have been unable to receive read data. One of the reasons for the inability of the switching device 23 to receive read data may be, for example, a failure of a proper communication between the switching device 23 and the slave, or a fault (failure) in the slave itself. Accordingly, in SM33, i.e. , a step to which the process shifts when a judgment of NO is indicated in SM32, the determining unit 258 reports that fact to the MPU 24. This report ends an operation series related to the locating of a fault spot.

In SM29, the monitored-data comparing unit 255 determines whether the receiving buffer 254 has output NACK signal. When the receiving buffer 254 has output NACK signal, the determination made by the monitored-data comparing unit 255 in SM29 indicates a judgment of YES, thereby shifting the process to SM30. When the receiving buffer 254 has not output NACK signal, the determination made by the monitored-data comparing unit 255 in SM29 indicates a judgment of NO, thereby shifting the process to SM35.

As illustrated in FIG. 4B and 4D, the NACK signal received by the receiving buffer 254 is data returned from the switching device 23. Thus, a judgment of NO in SM29 indicates that a fault could have possibly occurred in a communication from the PLD 25 to the switching device 23 performed via the I2C bus 26 or a communication from the switching device 23 to the PLD 25 performed via the data line for monitoring 27. Consequently, the receiving buffer 254 also does not output NACK signal when the switching device 23 does not properly return NACK signal. Accordingly, a judgment of NO is indicated in SM29, thereby the process to SM35.

As described above, in the present embodiment, consistency is checked using pieces of data transmitted and received via the I2C bus 26, consistency is checked using pieces of data received via the data line for monitoring 27, and consistency is checked between pieces of data transmitted and received via the I2C bus 26 and the data line for monitoring 27. The three types of consistency checking enable the correct locating of a spot where a fault may have possibly occurred.

The embodiment uses the I2C standard as an interface standard, but interface standards to be used are not limited to the I2C standard. An interface standard that is different from the I2C standard may be used.

In the embodiment, objects with which the master (PLD 25) actually communicates may be roughly divided into the switching device 23 and slaves connected via the switching device 23. The scope of a spot where a fault is to be judged to have occurred may be limited in accordance with what object a communication is performed with. Thus, a fault spot may be located in view of the result of a determination as to whether an object with which a communication is performed is the switching device 23. This is also a reason why the method for locating a fault spot, i.e., the functional configuration of the PLD 25, is not limited to the one depicted in FIG. 2A to FIG. 2C.

In the embodiment, the PLD 25 corresponds to a fault-spot locating apparatus that locates a fault spot, and such a fault-spot locating apparatus may be mounted in the switching device 23. This is because the switching device 23 is an apparatus that is capable of obtaining all data the PLD 25 can obtain. A fault spot can be located by obtaining data, and hence the fault-spot locating apparatus may be provided at an apparatus different from the PLD 25 and the switching device 23 or at a position different from the positions of the PLD 25 and the switching device 23. In a system configuration in which a plurality of switching devices, e.g., the switching devices 23, are connected in cascade, the fault-spot locating apparatus may be provided for each switching device, and a host fault-spot locating apparatus may be provided that ultimately locates a fault spot by processing the results of the locating by the fault-spot locating apparatuses. This is another reason why the information processing apparatus is not limited to configurations such as those depicted in FIG. 1 (FIG. 1A and FIG. 1B) and FIG. 2(FIG. 2A to FIG. 2C).

Applying the present invention allows a fault spot to be correctly located at a low cost in a configuration in which a switching device is provided between a master and each slave.

## Claims

1. A fault-spot locating method, comprising:
at a switching apparatus(23) that includes an interface (231) for connection to a master(25), which is a controlling object, and a plurality of ports(232) for connection to a slave(3), which is a controlled object, providing another interface(27) used to output information indicating an operation of the switching apparatus(23) and received data, and causing the switching apparatus(23)to transmit the information via the another interface(27); and
causing an apparatus that is capable of obtaining the information transmitted via the another interface (27) to locate a spot where a fault has possibly occurred by using the information to check the received data and the operation of the switching apparatus(23) caused by a command from the master(25).

2. The fault-spot locating method according to claim 1, wherein
the information includes at least
identification information indicating a port (232) by which the switching apparatus (23) allows a communication to be performed, among the plurality of ports and
some pieces of data the switching apparatus(23) receives from at least one of the master(25) or the slave(3).

3. The fault-spot locating method according to claim 1 or 2, wherein
the apparatus locates a spot where a fault has possibly occurred from among a spot between the master(25) and the switching apparatus(23), a spot at the switching apparatus(23), a spot between the switching apparatus(23) and the slave(3), and a spot at the slave(3).

4. A switching apparatus(23) comprising:
an interface(231) for connection to a master(25), which is a controlling object, and a plurality of ports(232) for connection to a slave(3), which is a controlled object,
another interface(27); and
an information outputting unit(239) configured to cause information for locating a fault spot to be transmitted using the another interface(240) when a communication with the master(25) is performed using the interface(231).

5. The switching apparatus(23) according to claim 4, comprising:
a changeover unit(234) configured to switch a port by which a communication is capable of being performed between the plurality of ports(232), wherein
the information outputting unit (239) causes at least one part of data received by the switching apparatus(23) from at least one of the master(25) or the slave(3) to be transmitted, the identification information indicating a port from among the plurality of ports(232) by which the changeover unit(234) allows a communication to be performed as the information.

6. The switching apparatus(23) according to claim 4 or 5, wherein
in accordance with a type of a command received from the master(25), the information outputting unit changes data to be output as the information.

7. A fault-spot locating apparatus, comprising:
a receiving unit (254) configured to receive information for identifying a fault spot transmitted from a switching apparatus(23) that includes
an interface (231) for connection to a master(25), which is a controlling object,
a plurality of ports(232) for connection to a slave(3), which is a controlled object, and
another interface(240), the information being transmitted via the another interface;
an obtaining unit(251) configured to obtain data transmitted and received between the master(25) and the switching apparatus(23); and
a locating unit(258) configured to locate a spot where a fault has possibly occurred using the data obtained by the obtaining unit(251) and the information received by the receiving unit(254).

8. The fault-spot locating apparatus according to claim 7, wherein
the locating unit(258) locates a spot where a fault has possibly occurred from among a spot between the master (25) and the switching apparatus(23), a spot at the switching apparatus (23), a spot between the switching apparatus (23) and the slave(3), and a spot at the slave(3).

9. An information processing apparatus, comprising:
a switching apparatus(23) including an interface(231) for connection to a master(25), which is a controlling object, and a plurality of ports(232) for connection to a slave(3), which is a controlled object; and
a fault-spot locating apparatus (25) configured to locate a spot where a fault has occurred, wherein
the switching apparatus(23) includes
another interface(240), and
an information outputting unit (239) configured to cause information for locating a fault spot to be transmitted using the another interface (24) when a communication with the master(25) is performed using the interface(231), and
the fault-spot locating apparatus(25) includes
a receiving unit(254) configured to receive the information transmitted from the switching apparatus(23) via the another interface(240),
an obtaining unit(251) configured to obtain data transmitted and received between the master(25) and the switching apparatus(23), and
a locating unit(258) configured to locate a spot where a fault has possibly occurred using the data obtained by the obtaining unit(251) and the information received by the receiving unit(254).
